# EUROPEAN PATENT APPLICATION

(11) **EP 4 738 935 A1**
(43) Date of publication of application: **06.05.2026**
(21) Application number: 25736597.3
(22) Date of filing: 30.06.2025
(51) Int. Cl.: H04W 48/16, H04W 48/18, H04W 8/18, H04W 8/02, H04W 88/06, H04W 60/04

(54) **ELECTRONIC DEVICE PERFORMING NETWORK SEARCH, AND OPERATING METHOD THEREOF**

(30) Priority: 21.08.2024 KR 20240112141; 02.10.2024 KR 20240134242
(71) Applicant: Samsung Electronics Co., Ltd., Suwon-si, Gyeonggi-do 16677 (KR)
(72) Inventor: KIM, Huiyeon, Suwon-si, Gyeonggi-do 16677 (KR); JUNG, Dongsuk, Suwon-si, Gyeonggi-do 16677 (KR)
(74) Representative: HGF
(86) International application number: PCT/KR2025/009216
(87) International publication number: WO 2026/043066

(57) **Abstract**

An electronic device is provided. The electronic device checks overlapping radio access technologies (RATs) between a first RAT list stored in a subscriber identification module (SIM) of the electronic device and a second RAT list stored in memory of the electronic device. Here, the first RAT list refers to a list of RATs for a first public land mobile network (PLMN), and the second RAT list refers to a list of RATs supported by the electronic device are sorted by priority. The electronic device generates a third RAT list including the overlapping RATs, sorts the third RAT list generated based on the priority, and performs a network search based on the sorted third RAT list.

## Description

### BACKGROUND

### 1. Field

The disclosure relates to an electronic device performing a network search and an operating method thereof.

### 2. Description of Related Art

A radio access technology (RAT) list for a home public land mobile network (HPLMN) of an electronic device may be stored in a subscriber identification module (SIM) of the electronic device, for example in an element file (EF)_HPLMN selector with access technology (HPLMNwAcT) field of the SIM. The electronic device, when searching the HPLMN, may search an RAT according to the RAT list stored in SIM (e.g. in the EF_HPLMNwAcT field).

In the RAT list stored in the SIM (e.g. in the EF_HPLMNwAcT field), wideband code division multiple access (WCDMA) or global system for mobile communication (GSM) may have a higher priority than that of long-term evolution (LTE) or new radio (NR). In this case, the electronic device may search WCDMA or GSM first before LTE or NR.

### SUMMARY

Typically, when an electronic device searches a lower (e.g. older) radio access technology (RAT) (e.g., wideband code division multiple access (WCDMA) or global system for mobile communication (GSM)) first before a higher (e.g. newer) RAT (e.g., new radio (NR) or long-term evolution (LTE)) according to a RAT list stored in a SIM, (for example in an element file (EF)_HPLMN selector with access technology (HPLMNwAcT) field), the time required for the electronic device to be connected to the higher (e.g. newer) network (e.g., an NR network or an LTE network) may be longer.

An aspect of various embodiments of the present disclosure provides an electronic device searching a higher RAT (or a higher network) first before a lower RAT (or a lower network). In the present disclosure the terms 'higher' and 'lower' used in "higher RAT" and "higher network" may refer to the generation/version of the RAT/network. That is, a higher RAT/network may be a later or newer (i.e. more recent) generation/version of the RAT/network, and a lower RAT/network may be an earlier or older (i.e. less recent) generation/version.

According to an embodiment, an electronic device includes a subscriber identification module (SIM) storing a first RAT list for a first public land mobile network (PLMN), memory storing instructions and storing a second RAT list in which RATs supported by the electronic device are sorted by priority and at least one processor including processing circuitry. The instructions, when executed by the processor individually or collectively, cause the electronic device to check overlapping RATs between the first RAT list and the second RAT list, generate a third RAT list including the overlapping RATs, sort the third RAT list generated based on the priority, and perform a network search based on the sorted third RAT list.

According to an embodiment, an electronic device includes a SIM storing a first RAT list for a first PLMN, memory storing instructions and storing a second RAT list in which RATs supported by the electronic device are sorted by priority, and at least one processor including processing circuitry. The instructions, when executed by the processor individually or collectively, cause the electronic device to determine whether a registered PLMN (RPLMN) and a registered RAT are included in the electronic device, select the first PLMN when determining that the RPLMN and the registered RAT are not included, check overlapping RATs between the first RAT list and the second RAT list after selecting the first PLMN, generate a third RAT list including the overlapping RATs, sort the third RAT list generated based on the priority, and perform a network search based on the sorted third RAT list.

According to an embodiment, an electronic device comprises a SIM storing a first RAT list for a first PLMN; memory storing instructions and storing a second RAT list in which RATs supported by the electronic device are sorted by priority; and at least one processor comprising processing circuitry. The instructions, when executed by the at least one processor individually or collectively, cause the electronic device to check for overlapping RATs between the first RAT list and the second RAT list, generate a third RAT list comprising the overlapping RATs, sort the third RAT list based on the priority, and perform a network search based on the sorted third RAT list.

According to an embodiment, an operating method of an electronic device includes checking overlapping RATs between a first RAT list stored in a SIM of the electronic device and a second RAT list stored in memory of the electronic device, in which the first RAT list refers to a list of RATs for a first PLMN, and the second RAT list refers to a list of RATs supported by the electronic device are sorted by priority, generating a third RAT list including the overlapping RATs, sorting the third RAT list generated based on the priority, and performing a network search based on the sorted third RAT list.

According to an embodiment, an operating method of an electronic device comprises checking for overlapping RATs between a first RAT list stored in a SIM of the electronic device and a second RAT list stored in memory of the electronic device, wherein the first RAT list refers to a list of RATs for a first PLMN, and the second RAT list refers to a list of RATs supported by the electronic device and sorted by priority; generating a third RAT list comprising the overlapping RATs; sorting the third RAT list based on the priority; and performing a network search based on the sorted third RAT list.

Software on an operating method of an electronic device may be stored in a non-transitory computer-readable recording medium. The operating method includes checking overlapping RATs between a first RAT list stored in a SIM of the electronic device and a second RAT list stored in memory of the electronic device, in which the first RAT list refers to a list of RATs for a first PLMN, and the second RAT list refers to a list of RATs supported by the electronic device are sorted by priority, generating a third RAT list including the overlapping RATs, sorting the third RAT list generated based on the priority, and performing a network search based on the sorted third RAT list.

Software on an operating method of an electronic device may be stored in a non-transitory computer-readable recording medium. The operating method comprises checking for overlapping RATs between a first RAT list stored in a SIM of the electronic device and a second RAT list stored in memory of the electronic device, wherein the first RAT list refers to a list of RATs for a first PLMN, and the second RAT list refers to a list of RATs supported by the electronic device and sorted by priority; generating a third RAT list comprising the overlapping RATs; sorting the third RAT list based on the priority; and performing a network search based on the sorted third RAT list.

### BRIEF DESCRIPTION OF THE DRAWINGS

FIG. 1 is a block diagram illustrating an electronic device in a network environment according to an embodiment.
FIG. 2 is a block diagram illustrating an electronic device in a network environment including a plurality of cellular networks according to an embodiment.
FIG. 3 is a block diagram illustrating an example of a configuration of an electronic device according to an embodiment.
FIGS. 4A and 4B are diagrams each illustrating an example of an operation of determining a radio access technology (RAT) list for a network search by the electronic device according to an embodiment.
FIG. 5 is a diagram illustrating another example of the operation of determining a RAT list for a network search by the electronic device according to an embodiment.
FIG. 6 is a flowchart illustrating an example of a network search of an electronic device when the electronic device is not in a roaming state, according to an embodiment.
FIG. 7 is a flowchart illustrating another example of a network search of an electronic device when the electronic device is not in a roaming state, according to an embodiment.
FIG. 8 is a flowchart illustrating an example of a network search of an electronic device when the electronic device is in a roaming state, according to an embodiment.
FIG. 9 is a flowchart illustrating an operation method of an electronic device according to an embodiment.

### DETAILED DESCRIPTION

Hereinafter, embodiments will be described in detail with reference to the accompanying drawings. When describing the example embodiments with reference to the accompanying drawings, like reference numerals refer to like components and a repeated description related thereto will be omitted.

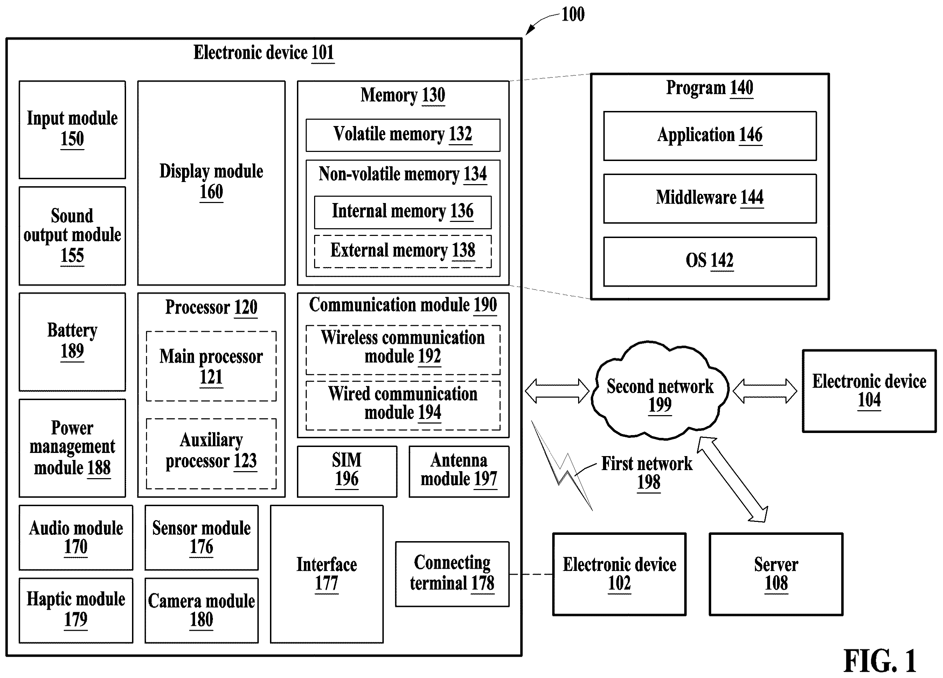

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some examples, at least one (e.g., the connecting terminal 178) of the above components may be omitted from the electronic device 101, or one or more other components may be added in the electronic device 101. In some examples, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101 instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated by machine learning. The machine learning may be performed by, for example, the electronic device 101, in which AI is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but examples are not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control a corresponding one of the display, the hologram device, and the projector. According to an embodiment, the display module 160 may include a touch sensor adapted to sense a touch, or a pressure sensor adapted to measure an intensity of a force incurred by the touch. The display module 160 may be implemented with, for example, a foldable structure and/or a rollable structure. For example, a size of a display screen of the display module 160 may be reduced when folded and expanded when unfolded.

The audio module 170 may convert a sound into an electrical signal or vice versa. According to an embodiment, the audio module 170 may obtain the sound via the input module 150 or may output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101 and may generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell that is not rechargeable, a secondary cell that is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a current (e.g. 5G) network, a next-generation communication network, the Internet, or a computer network (e.g., a LAN or a wide region network (WAN)). These various types of communication modules may be implemented as a single component (e.g., a single chip) or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, for example, a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beamforming, or a large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices (e.g., the electronic device 102 or 104) may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or service. The one or more external electronic devices receiving the request may perform the at least part of the function or service, or an additional function or an additional service related to the request and may transfer a result of the performance to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra-low-latency services using, for example, distributed computing or MEC. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment, the electronic device is not limited to those described above.

It should be understood that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question, and may refer to components in other aspects (e.g., importance or order) is not limited. It is to be understood that if a component (e.g., a first component) is referred to, with or without the term "operatively" or "communicatively", as "coupled with", "coupled to", "connected with", or "connected to" another component (e.g., a second component), it means that the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101 of FIG. 1). For example, a processor (e.g., the processor 120) of the machine (e.g., the electronic device 101) may invoke at least one of the one or more instructions stored in the storage medium and execute it. This allows the machine to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to an embodiment, the integrated component may still perform one or more functions of each of the components in the same or similar manner as they are performed by a corresponding one among the components before the integration. According to various example embodiments, operations performed by the module, the program, or another component may be carried out sequentially, in parallel, repeatedly, or heuristically, or one or more of the operations may be executed in a different order or omitted, or one or more other operations may be added.

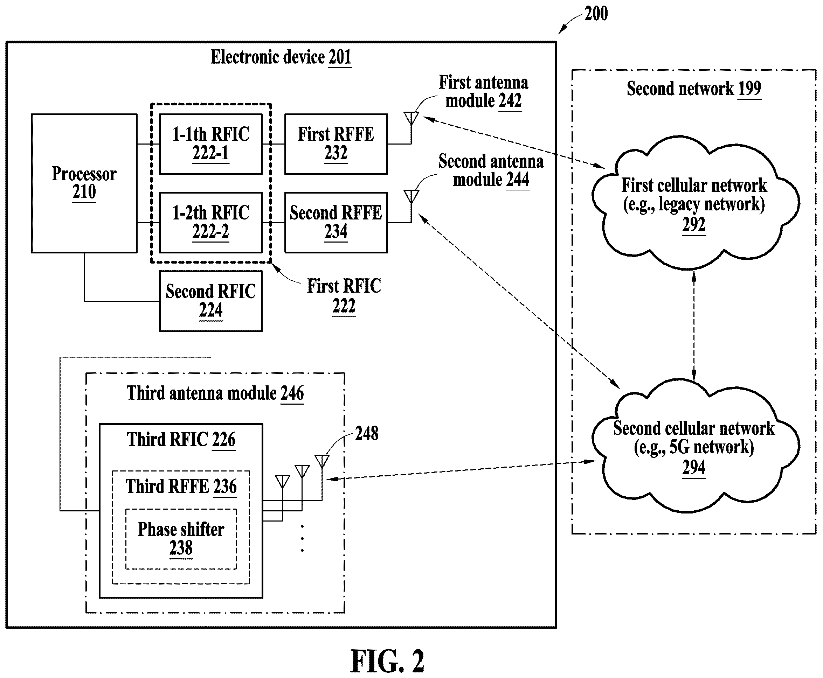

FIG. 2 is a block diagram illustrating an electronic device in a network environment including a plurality of cellular networks according to an embodiment.

Referring to FIG. 2, an electronic device 201 (e.g., the electronic device 101 of FIG. 1) may include a processor 210 (e.g., the processor 120 of FIG. 1 or a CP), a 1-1th radio frequency integrated circuit (RFIC) 222-1, and a 1-2th RFIC 222-2, a second RFIC 224, a first radio frequency front end (RFFE) 232, a second RFFE 234, a first antenna module 242, a second antenna module 244, and a third antenna module 246. Depending on embodiments, the 1-1th RFIC 222-1 and the (1-2) RFIC 222-2 may be implemented as one RFIC 222. The second network 199 may include a first cellular network 292 (e.g., a legacy network) and a second cellular network 294 (e.g., a current network such as a 5G network or future networks). The electronic device 201 may further include at least one of the components described with reference to FIG. 1, and the second network 199 may further include at least one another network. According to an embodiment, the second RFIC 224 may be omitted or may be included as a portion of the third RFIC 226.

According to an embodiment, the 1-1th RFIC 222-1, the 1-2th RFIC 222-2, the second RFIC 224, the first RFFE 232, and the second RFFE 234 of FIG. 2 may be included in the communication module 190 (e.g., the wireless communication module 192) of FIG. 1, and the first antenna module 242, the second antenna module 244, and the third antenna module 246 of FIG. 2 may be included in the antenna module 197 of FIG. 1.

According to an embodiment, the processor 210 may establish a communication channel of a band to be used for wireless communication with the first cellular network 292 and support legacy network communication through the established communication channel. The first cellular network 292 may be, for example, a legacy network including a second generation (2G) network, a 3G network, a 4G network, or long-term evolution (LTE) network. The processor 210 may establish a communication channel corresponding to a first band (e.g., about 6 GHz to about 60 GHz) ((or a 5G standard frequency range (FR) 2 (e.g., 24.25 GHz to 52.6 GHz)) among bands to be used for wireless communication with the second cellular network 294 and may support 5G network communication through the established communication channel. The second cellular network 294 may be a 5G network defined by a third-generation partnership project (3GPP). However, it will be appreciated that the second cellular network 294 is not limited thereto, and that in future the second cellular network 294 may be a 6G network, for example, and that a 5G network may accordingly in future be considered a legacy network that may be included in the first cellular network 292. The processor 210 may establish a communication channel corresponding to a second band (e.g., about 6 GHz or less) ((or a 5G standard FR1 (e.g., 410 MHz to 7.125 GHz)) among bands to be used for wireless communication with the second cellular network 294 and may support 5G network communication through the established communication channel.

According to an embodiment, during transmission, the 1-1th RFIC 222-1 (or the first RFIC 222) may convert a baseband signal generated by the processor 210 into a radio frequency (RF) signal of a frequency band (e.g., about 700 MHz to about 3 GHz) to be used in the first cellular network 292. During reception, an RF signal may be received or acquired from the first cellular network 292 via the first antenna module 242 and may be preprocessed through the first RFFE 232. The 1-1th RFIC 222-1 (or the first RFIC 222) may convert the preprocessed RF signal into a baseband signal such that the signal may be processed by the processor 210.

According to an embodiment, during transmission, the 1-2th RFIC 222-2 (or the first RFIC 222) may convert a baseband signal generated by the processor 210 into an RF signal (hereinafter, referred to as a "5G Sub6 RF signal") of a Sub6 band (e.g., about 6 GHz or less) to be used in the second cellular network 294. During reception, the 5G Sub6 RF signal may be received or acquired from the second cellular network 294 via the second antenna module 244 and may be preprocessed through the second RFFE 234. The 1-2th RFIC 222-2 (or the first RFIC 222) may convert the preprocessed 5G Sub6 RF signal into a baseband signal such that the signal may be processed by the processor 210.

According to an embodiment, the third RFIC 226 may convert a baseband signal generated by the processor 210 into an RF signal (hereinafter, referred to as a "5G Above6 RF signal") of a 5G Above6 band (e.g., about 6 GHz to about 60 GHz) to be used in the second cellular network 294. During reception, the 5G Above6 RF signal may be received or acquired from the second cellular network 294 via the third antenna module 246 (e.g., an antenna 248) and may be preprocessed through the third RFFE 236. The third RFIC 226 may convert the preprocessed 5G Above6 RF signal into a baseband signal such that **the signal** may be processed by the processor 210. According to an embodiment, the third RFFE 236 may be formed as a portion of the third RFIC 226.

According to an embodiment, the electronic device 201 may include the second RFIC 224 separately from the third RFIC 226 or as at least a portion of the third RFIC 226. In this case, the second RFIC 224 may convert the baseband signal generated by the processor 210 into an RF signal (hereinafter, referred to as an IF signal) of an intermediate frequency band (e.g., approximately 9 GHz to 11 GHz) and may transmit the IF signal to the third RFIC 226. The third RFIC 226 may convert the IF signal into a 5G Above6 RF signal. During reception, the 5G Above6 RF signal may be received or acquired from the second cellular network 294 via the third antenna module 246 (e.g., the antenna 248) and may be converted into an IF signal by the third RFIC 226. The second RFIC 224 may convert the IF signal into a baseband signal such that the signal may be processed by the processor 210.

According to an embodiment, at least one of the first antenna module 242 or the second antenna module 244 may be omitted or combined with another antenna module to process RF signals of a plurality of corresponding bands.

According to an embodiment, the third RFIC 226 and the antenna 248 may be disposed on the same substrate to form the third antenna module 246. For example, the processor 120 may be disposed on a first substrate (e.g., a main PCB). In this example, the third RFIC 226 may be disposed on a partial area (e.g., a bottom surface) of a second substrate (e.g., a sub PCB) separate from the first substrate, and the antenna 248 may be disposed on another partial area (e.g., a top surface) of the second substrate (e.g., the sub PCB), to form the third antenna module 246. The third RFIC 226 and the antenna 248 may be disposed on the same substrate, and accordingly, it is possible to reduce a length of a transmission line between the third RFIC 226 and the antenna 248. This may reduce, for example, the loss (e.g., attenuation) of a signal in a high frequency band (e.g., approximately 6 GHz to 60 GHz) used for 5G network communication due to a transmission line. Thus, the electronic device 201 may enhance the quality or speed of communication with the second cellular network 294 (e.g., a 5G network).

According to an embodiment, the antenna 248 may be formed as an antenna array including a plurality of antenna elements that may be used for beamforming. In this case, the third RFIC 226 may include, for example, a plurality of phase shifters 238 corresponding to the plurality of antenna elements as a portion of the third RFFE 236. During transmission, each of the plurality of phase shifters 238 may convert a phase of a 5G Above6 RF signal to be transmitted to the outside (e.g., a base station of a 5G network) of the electronic device 201 through a corresponding antenna element. During reception, each of the plurality of phase shifters 238 may convert a phase of a 5G Above6 RF signal received from the outside (e.g., the base station of the 5G network) through the corresponding antenna element into the same or substantially the same phase. This may enable a transmission or reception through beamforming between the electronic device 201 and the outside.

The second cellular network 294 may be operated independently of the first cellular network 292 (e.g., standalone (SA)) or in connection to the first cellular network 292 (e.g., non-standalone (NSA)). For example, a 5G network may include only an access network (e.g., a 5G radio access network (RAN) or a next generation RAN (NG RAN)) and may not include a core network (e.g., a next generation core (NGC)). In this case, after accessing an access network of the 5G network, the electronic device 201 may access an external network (e.g., the Internet) under a control of a core network (e.g., an evolved packet core (EPC)) of a legacy network. Protocol information (e.g., LTE protocol information) for communication with a legacy network or protocol information (e.g., NR protocol information) for communication with the 5G network may be stored in memory (e.g., the memory 130 of FIG. 1) to be accessed by the processor 210.

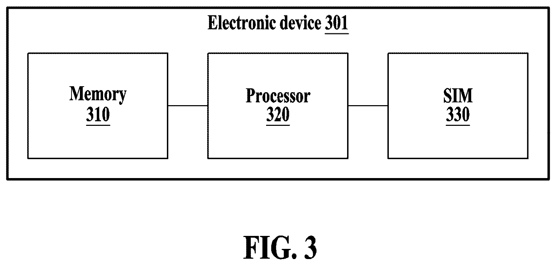

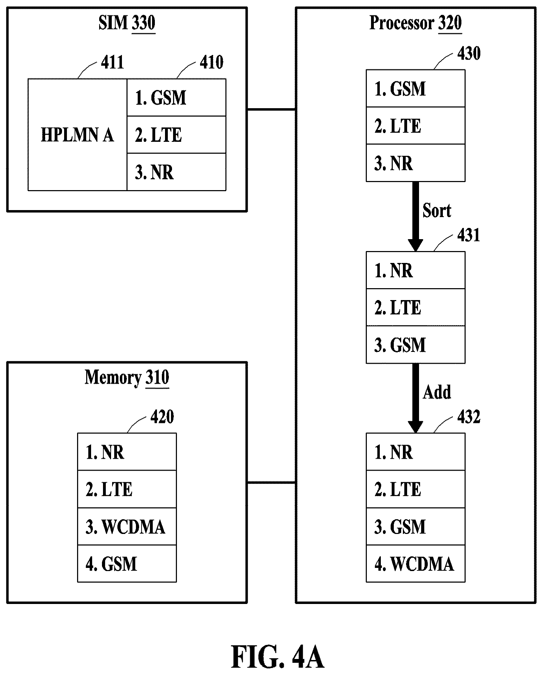

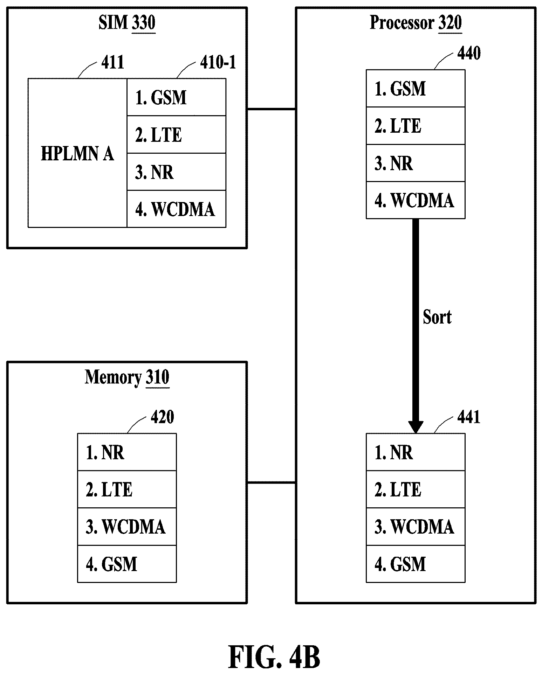

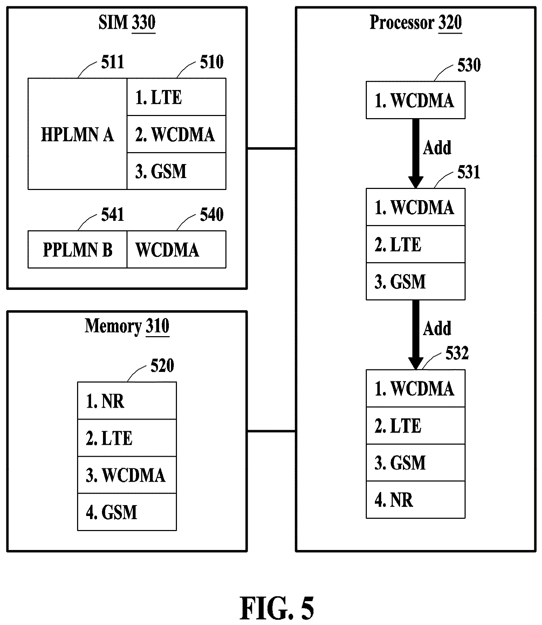

FIG. 3 is a block diagram illustrating an example of a configuration of an electronic device according to an embodiment, FIGS. 4A and 4B are diagrams each illustrating an example of an operation of determining a radio access technology (RAT) list for a network search by the electronic device according to an embodiment, and FIG. 5 is a diagram illustrating another example of the operation of determining a RAT list for a network search by the electronic device according to an embodiment.

Referring to FIG. 3, an electronic device 301 (e.g., the electronic device 101 of FIG. 1 or the electronic device 201 of FIG. 2), according to an embodiment, may include memory 310 (e.g., the memory 130 of FIG. 1), at least one processor 320 (e.g., the processor 120 of FIG. 1 or the processor 210 of FIG. 2), and a SIM (or a SIM card) 330 (e.g., the SIM 196 of FIG. 1).

According to an embodiment, the processor 320 may include processing circuitry.

According to an embodiment, the SIM 330 may store a first RAT list for a first public land mobile network (PLMN) (e.g., a home public land mobile network (HPLMN) of the electronic device 301). For example, an identifier of the HPLMN of the electronic device 301 and the first RAT list may be stored in an element file (EF)_HPLMN selector with access technology (HPLMNwAcT) field (e.g., an EF_HPLMNwAcT field of 3GPP TS 31.102) of the SIM 330. The identifier of the HPLMN may be mapped to the first RAT list in the EF_HPLMNwAcT field. The HPLMN may include, for example, a PLMN managed by a mobile network operator to which a user of the electronic device 301 subscribes.

According to an embodiment, the first RAT list may include RATs supported by the first PLMN (e.g., the HPLMN of the electronic device 301). For example, the HPLMN of the electronic device 301 may support at least one of or all of global system for mobile communication (GSM), wideband code division multiple access (WCDMA), long-term evolution (LTE), or new radio (NR). The first RAT list may refer to, for example, a list in which RAT search order (or network search order) is determined by a mobile network operator of an HPLMN.

According to an embodiment, the memory 310 may store one or more instructions executable by the processor 320. The one or more instructions stored in the memory 310, when executed by the processor 320, may cause the electronic device 301 to perform operations of the electronic device 301 to be described below.

According to an embodiment, the memory 310 may store a second RAT list in which RATs supported by the electronic device 301 are sorted by priority (e.g., the most recent order of the RATs). The second RAT list may refer to, for example, a list in which the RAT search order (or the network search order) is sorted by the most recent order of the RATs. For example, the electronic device 301 may support GSM, WCDMA, LTE, and NR. Among the RATs (e.g., GSM, WCDMA, LTE, and NR) supported by the electronic device 301, the NR may be the most recent RAT, the LTE may be the second most recent RAT, the WCDMA may be the second oldest RAT, and the GSM may be the oldest RAT. In the second RAT list, the RATs may be sorted in order of the NR, the LTE, the WCDMA, and the GSM. In the second RAT list, the NR may have the highest priority, the LTE may have the second highest priority, the WCDMA may have the third highest priority, and the GSM may have the lowest priority. In the second RAT list, the search order for the NR may be the first, the search order for the LTE may be the second, the search order for the WCDMA may be the third, and the search order for the GSM may be the last. Depending on implementations, the most recent RAT may not have the highest priority in the second RAT list, based on at least one of coverage, a SIM (e.g., the SIM 330) recognized by the electronic device 301, or a mobile country code (MCC) of a region where the electronic device 301 is located, among the RATs supported by the electronic device 301 (e.g., the GSM, the WCDMA, the LTE, and the NR). For example, in the second RAT list, the LTE, which is the second most recent RAT, may have the highest priority, the NR, which is the most recent RAT, may have the second highest priority, the WCDMA may have the third highest priority, and the GSM may have the lowest priority. In the second RAT list, the RATs may be sorted in order of the LTE, the NR, the WCDMA, and the GSM.

According to an embodiment, when the electronic device 301 is powered on (or when the electronic device 301 is booted), the electronic device 301 (e.g., the processor 320) may check (or determine) whether the electronic device 301 has a registered public land mobile network (RPLMN) and a registered RAT. The RPLMN may refer to a PLMN registered the most recently by the electronic device 301, and the registered RAT may refer to a RAT registered the most recently by the electronic device 301.

For example, the processor 320, when the electronic device 301 is powered on, may check (or determine) whether information (e.g., an identifier of the RPLMN) of the RPLMN (or a valid RPLMN) is stored in the SIM 330 (e.g., a location information (LOCI) field of the SIM 330). The processor 320 may check (or determine) that the electronic device 301 does not have the RPLMN (or the valid RPLMN) when the information of the RPLMN is not stored in the LOCI field of the SIM 330. That is, the processor 320 may check if the information of the RPLMN is stored in the SIM 330 (for example in the LOCI field), and if it is determined that the information of the RPLMN is not stored in the SIM 330 (for example is not stored in the LOCI field), then the processor 320 may determine that the electronic device 301 does not have the RPLMN (or the valid RPLMN). The processor 320, when the information (e.g., the identifier of the RPLMN) of the RPLMN is stored in the SIM 330 (for example in the LOCI field), may compare a country code (e.g., an MCC) of a PLMN identifier in a system information message (e.g., system information block (SIB) 1) received from a network with a country code (e.g., an MCC) of the information (e.g., the identifier of the RPLMN) of the RPLMN stored in the SIM 330. The processor 320 may check (or determine) that the electronic device 301 has the RPLMN (or the valid RPLMN) when the country code of the PLMN identifier in the system information message matches the country code of the information of the RPLMN stored in the SIM 330. That is, the processor 320 may check if the country code of the PLMN identifier in the system information message matches the country code of the information of the RPLMN stored in the SIM 330, and if it is determined that the country code of the PLMN identifier in the system information message matches the country code of the information of the RPLMN stored in the SIM 330, then the processor 320 may determine that the electronic device 301 has the RPLMN (or the valid RPLMN). The processor 320 may check (or determine) that the electronic device 301 does not have the RPLMN (or the valid RPLMN) when the country code of the PLMN identifier in the system information message does not match the country code of the information of the RPLMN stored in the SIM 330. That is, the processor 320 may check if the country code of the PLMN identifier in the system information message matches the country code of the information of the RPLMN stored in the SIM 330, and if it is determined that the country code of the PLMN identifier in the system information message does not match the country code of the information of the RPLMN stored in the SIM 330, then the processor 320 may determine that the electronic device 301 does not have the RPLMN (or the valid RPLMN).

The processor 320, when the electronic device 301 is powered on, may check (or determine) whether information (e.g., an identifier of the registered RAT) of the registered RAT (or a valid registered RAT) is stored in the memory 310. The processor 320, when the information of the registered RAT is not stored in the memory 310, may check (or determine) that the electronic device 301 does not have the registered RAT. That is, the processor 320 may check if the information of the registered RAT is stored in the memory 310, and if it is determined that the information of the registered RAT is not stored in the memory 310, then the processor 320 may determine that the electronic device 301 does not have the registered RAT (or the valid registered RAT). The processor 320, when the information of the registered RAT is stored in the memory 310, may check (or determine) that the electronic device 301 has the registered RAT. That is, the processor 320 may check if the information of the registered RAT is stored in the memory 310, and if it is determined that the information of the registered RAT is stored in the memory 310, then the processor 320 may determine that the electronic device 301 has the registered RAT (or the valid registered RAT).

According to an embodiment, the electronic device 301 (e.g., the processor 320), when having the RPLMN and the registered RAT, may perform a network search based on a combination of the RPLMN and the registered RAT.

According to an embodiment, the electronic device 301 (e.g., the processor 320), when not having the RPLMN and/or not having the registered RAT, may determine whether the electronic device 301 is in a roaming state (e.g., in an international roaming state).

For example, the processor 320, when not having the RPLMN and/or not having the registered RAT, may check (or determine) whether an MCC of international mobile subscriber identity (IMSI) of the electronic device 301 stored in the SIM 330 matches the MCC of the PLMN identifier in the system information message (e.g., SIB 1). The processor 320, when the MCC of the IMSI stored in the SIM 330 matches the MCC of the PLMN identifier in the system information message, may check whether a third digit of a mobile network code (MNC) of the PLMN identifier in the system information message has a predetermined value (e.g., a hexadecimal value F).

The processor 320, when the third digit of the MNC of the PLMN identifier in the system information message has the predetermined value, may compare first two digits of an MNC of the IMSI of the electronic device 301 with first two digits of the MNC of the PLMN identifier in the system information message. The processor 320, when the first two digits of the MNC of the IMSI of the electronic device 301 match the first two digits of the MNC of the PLMN identifier in the system information message, may determine that the electronic device 301 is not in a roaming state (or is in a home country). The processor 320, when the first two digits of the MNC of the IMSI of the electronic device 301 do not match the first two digits of the MNC of the PLMN identifier in the system information message, may determine that the electronic device 301 is in a roaming state.

The processor 320, when the third digit of the MNC of the PLMN identifier in the system information message does not have the predetermined value (e.g., the hexadecimal value F), may compare the MNC of the IMSI of the electronic device 301 with the MNC of the PLMN identifier in the system information message. The processor 320, when the MNC of the IMSI of the electronic device 301 matches the MNC of the PLMN identifier in the system information message, may determine that the electronic device 301 is not in a roaming state. The processor 320, when the MNC of the IMSI does not match the MNC of the PLMN identifier in the system information message, may determine that the electronic device 301 is in a roaming state.

According to an embodiment, when the electronic device 301 is not in a roaming state (or when the electronic device 301 is in a home country), the electronic device 301 (e.g., the processor 320) may generate a third RAT list for a network search, based on the first RAT list and the second RAT list. The electronic device 301 (e.g., the processor 320) may perform a network search based on the third RAT list. The third RAT list may include, for example, RATs searchable by the electronic device 301 that is not in a roaming state, and the third RAT list may be sorted in order, for example in priority order.

For example, the processor 320, when the electronic device 301 is not in a roaming state, may select the HPLMN and may obtain a first RAT list for the HPLMN from the SIM 330 (e.g., the EF_HPLMNwAcT field of the SIM 330). The processor 320 may obtain the second RAT list from the memory 310. The processor 320 may check overlapping RATs between the first RAT list and the second RAT list. The processor 320 may generate the third RAT list including the overlapping RATs. The processor 320 may sort the third RAT list based on a priority (e.g., a priority based on the sorting of the RATs in the second RAT list) (e.g., the most recent order of the RATs). The processor 320 may perform a network search based on the sorted third RAT list.

In the example shown in FIG. 4A, the processor 320, when the electronic device 301 is not in a roaming state, may select an HPLMN A 411 and may obtain a first RAT list 410 for the HPLMN A 411 of the electronic device 301 from the SIM 330. The processor 320 may obtain a second RAT list 420 from the memory 310. The processor 320 may check (or determine) overlapping RATs (e.g., the GSM, the LTE, and the NR of FIG. 4A) between the first RAT list 410 and the second RAT list 420. The processor 320 may generate a third RAT list 430 including the overlapping RATs (e.g., the GSM, the LTE, and the NR). The processor 320 may sort the third RAT list 430 based on the most recent order of the RATs.

According to an embodiment, among RATs in the first RAT list 410 and the second RAT list 420, there may be the remainder (e.g., the WCDMA in the second RAT list 420 of FIG. 4A), excluding the overlapping RATs. That is, the remainder may comprise RATs included in the first RAT list 410 that are not included in the second RAT list 420, and RATs included in the second RAT list 420 that are not included in the first RAT list 410. When there is the remainder (e.g., the WCDMA), the processor 320 may add the remainder (e.g., the WCDMA) to the sorted third RAT list 431. The remainder may be added to the end of the sorted RAT list, such that the RATs in the remainder have a lower priority than the overlapping RATs. For example, in the third RAT list 432, the NR may be the first (e.g., the highest priority in a network search), the LTE may be the second (e.g., the second highest priority in the network search), the GSM may be the third (e.g., the third highest priority in the network search), and the WCDMA may be the last (e.g., the lowest priority in the network search).

According to an embodiment, the processor 320 may perform a network search based on the third RAT list 432. For example, the processor 320 may search for the RATs in priority order according to the third RAT list 432 (i.e. according to the positions of the RATs in the third RAT list 432) until a RAT is found. For example, the first RAT in the third RAT list 432 may be searched for first, and if the first RAT is not found, the second RAT in the third RAT list 432 may be searched for second, and if the second RAT is not found, the third RAT in the third RAT list 432 may be searched for third, and so on. For example, the processor 320 may select the NR with the highest priority from the third RAT list 432 and may search for a network in a combination of the HPLMN A 411 and the NR. The processor 320, when a network is not found in the combination of the HPLMN A 411 and the NR, may select the LTE with the second highest priority from the third RAT list 432. The processor 320 may search for a network in a combination of the HPLMN A 411 and the LTE. The processor 320, when a network is not found in the combination of the HPLMN A 411 and the LTE, may select the GSM with the third highest priority from the third RAT list 432 and may search for a network in a combination of the HPLMN A 411 and the GSM. The processor 320, when a network is not found in the combination of HPLMN A 411 and the GSM, may select the WCDMA with the lowest priority from the third RAT list 432 and may search for a network in a combination of the HPLMN A 411 and the WCDMA.

According to an embodiment, as shown in the example of FIG. 4B, among RATs in a first RAT list 410-1 and the second RAT list 420, there may not be the remainder, excluding overlapping RATs. All RATs in the first RAT list 410-1 may overlap with all the RATs in the second RAT list 420. In the example shown in FIG. 4B, the processor 320 may generate a third RAT list 440 including the overlapping RATs (e.g., GSM, LTE, NR, and WCDMA of FIG. 4B) between the first RAT list 410-1 and the second RAT list 420. The processor 320 may sort the third RAT list 440 based on the most recent order of the RATs. In a sorted third RAT list 441, the NR may be the first, the LTE may be the second, the GSM may be the third, and the WCDMA may be the last.

According to an embodiment, in the example shown in FIG. 4B, the processor 320 may perform a network search based on the sorted third RAT list 441. For example, the processor 320 may search for the RATs in priority order according to the third RAT list 441 (i.e. according to the positions of the RATs in the third RAT list 441) until a RAT is found. For example, the first RAT in the third RAT list 441 may be searched for first, and if the first RAT is not found, the second RAT in the third RAT list 441 may be searched for second, and if the second RAT is not found, the third RAT in the third RAT list 441 may be searched for third, and so on. For example, the processor 320 may select the NR with the highest priority from the sorted third RAT list 441 and may search for a network in a combination of the HPLMN A 411 and the NR. The processor 320, when a network is not found in the combination of HPLMN A 411 and the NR, may select the LTE with the second highest priority from the sorted third RAT list 441. The processor 320 may search for a network in the combination of the HPLMN A 411 and the LTE. The processor 320, when a network is not found in the combination of HPLMN A 411 and the LTE, may select the WCDMA with the third highest priority from the sorted third RAT list 441. The processor 320 may search for a network in a combination of the HPLMN A 411 and the WCDMA. The processor 320, when a network is not found in the combination of the HPLMN A 411 and the WCDMA, may select the GSM with the lowest priority from the sorted third RAT list 441 and may search for a network in a combination of the HPLMN A 411 and the GSM. Depending on implementations, when all the RATs in the first RAT list 410-1 overlap with all the RATs in the second RAT list 420, the processor 320 may perform a network search based on the second RAT list 420.

According to an embodiment, from the perspective of a protocol stack (or a protocol layer), the generating of the third RAT list 430 or 440, the sorting of the third RAT list 430 or 440, and the adding of the remainder to the sorted third RAT list 431 may be performed in a non-access stratum (NAS) layer, and a network search using the third RAT list 432 or 441 may be performed in an access stratum (AS) layer.

According to an embodiment, the electronic device 301 (e.g., the processor 320), when the electronic device 301 is in a roaming state, may obtain a RAT list for a second PLMN (e.g., a preferred PLMN (PPLMN)) from the SIM 330. The RAT list for the second PLMN may include, for example, one or more RATs supported by the PPLMN of the electronic device. The electronic device 301 (e.g., the processor 320) may determine a fourth RAT list (e.g., a fourth RAT list 531 or a fourth RAT list 532 of FIG. 5) for a network search in a roaming state, based on the RAT list for the second PLMN, the first RAT list, and the second RAT list. In a roaming state, the electronic device 301 (e.g., the processor 320) may perform a network search based on the fourth RAT list.

For example, in the example shown in FIG. 5, the processor 320, when the electronic device 301 is in a roaming state, may select a PPLMN B 541 and may obtain a RAT list 540 for the PPLMN B 541 of the electronic device 301 from the SIM 330. The PPLMN B 541 and the RAT list 540 may be stored in, for example, an EF_user controlled PLMN with access technology (PLMNwACT) field of the SIM 330. The processor 320 may obtain a first RAT list 510 for an HPLMN A 511 from the SIM 330. The HPLMN A 511 and the first RAT list 510 may be stored in the EF_HPLMNwAcT field of the SIM 330. The processor 320 may obtain a second RAT list 520 from the memory 310. The processor 320 may generate a list 530 including RATs in the RAT list 540 for the PPLMN B 541. The processor 320 may check (or determine) overlapping RATs (e.g., GSM or LTE of FIG. 5) between the first RAT list 510 and the second RAT list 520.

The processor 320 may add the overlapping RATs (e.g., the GSM or the LTE) between the first RAT list 510 and the second RAT list 520 to the list 530. The overlapping RATs may be added to the end of the list 530, such that the overlapping RATs have a lower priority than the RATs from the obtained RAT list 540 (i.e. the RATs supported by the PPLMN of the electronic device 301). The LTE may have a higher priority than the GSM (or the LTE may be the latest technology than the GSM) in the second RAT list 520. Thus, the processor 320 may add the LTE and the GSM to the list 530 such that the LTE has a higher priority than the GSM. The processor 320 may generate (or determine) the fourth RAT list 531 by adding the overlapping RATs (e.g., the LTE and the GSM) between the first RAT list 510 and the second RAT list 520 to the list 530. In the fourth RAT list 531, a RAT (e.g., WCDMA) supported by the PPLMN B 541 may have the highest priority, the LTE of the overlapping RATs (e.g., the GSM and the LTE) between the first RAT list 510 and the second RAT list 520 may have the second highest priority, and the GSM of the overlapping RATs (e.g., the GSM and the LTE) between the first RAT list 510 and the second RAT list 520 may have the lowest priority.

The processor 320 may perform a network search based on the fourth RAT list 531. For example, the processor 320 may search for the RATs in priority order according to the fourth RAT list 531 (i.e. according to the positions of the RATs in the fourth RAT list 531) until a RAT is found. For example, the first RAT in the fourth RAT list 531 may be searched for first, and if the first RAT is not found, the second RAT in the fourth RAT list 531 may be searched for second, and if the second RAT is not found, the third RAT in the fourth RAT list 531 may be searched for third, and so on. For example, he processor 320 may select the WCDMA with the highest priority from the fourth RAT list 531 and may search for a network in a combination of the PPLMN B 541 and the WCDMA. The processor 320, when a network is not found in the combination of the PPLMN B 541 and the WCDMA, may select the LTE with the second highest priority from the fourth RAT list 531. The processor 320 may search for a network in a combination of the PPLMN B 541 and the LTE. The processor 320, when a network is not found in the combination of the PPLMN B 541 and the LTE, may select the GSM with the third highest priority from the fourth RAT list 532 and may search for a network in a combination of the PPLMN B 541 and the GSM.

According to an embodiment, there may be the remainder (e.g., the NR in the second RAT list 520 of FIG. 5), excluding the RATs (e.g., the WCDMA) in the RAT list 540 and the overlapping RATs (e.g., the GSM and the LTE) among RATs in the first RAT list 510 and the second RAT list 520. For example, the remainder may comprise RATs included in the first RAT list 510 that are not included in the second RAT list 520 or the obtained RAT list 540, and RATs included in the second RAT list 520 that are not included in the first RAT list 510 or the obtained RAT list 540. In this case, the processor 320 may add the remainder (e.g., the NR in the second RAT list 520 of FIG. 5) to the fourth RAT list 531. The remainder may be added to the end of the fourth RAT list 531, such that the RATs in the remainder have a lower priority than the overlapping RATs. For example, the NR may have the lowest priority in the fourth RAT list 532 to which the remainder (e.g., the NR in the second RAT list 520 of FIG. 5) is added.

The processor 320 may perform a network search based on the fourth RAT list 532. For example, the processor 320 may search for the RATs in priority order according to the fourth RAT list 532 (i.e. according to the positions of the RATs in the fourth RAT list 532) until a RAT is found. For example, the first RAT in the fourth RAT list 532 may be searched for first, and if the first RAT is not found, the second RAT in the fourth RAT list 532 may be searched for second, and if the second RAT is not found, the third RAT in the fourth RAT list 532 may be searched for third, and so on. For example, the processor 320 may select the WCDMA with the highest priority from the fourth RAT list 532 and may search for a network in a combination of the PPLMN B 541 and the WCDMA. The processor 320, when a network is not found in the combination of the PPLMN B 541 and the WCDMA, may select the LTE with the second highest priority from the fourth RAT list 532. The processor 320 may search for a network in a combination of the PPLMN B 541 and the LTE. The processor 320, when a network is not found in the combination of the PPLMN B 541 and the LTE, may select the GSM with the third highest priority from the fourth RAT list 532 and may search for a network in a combination of the PPLMN B 541 and the GSM. The processor 320, when a network is not found in the combination of the PPLMN B 541 and the GSM, may select the NR with the fourth highest priority from the fourth RAT list 532 and may search for a network in a combination of the PPLMN B 541 and the NR.

According to an embodiment, from the perspective of a protocol stack (or a protocol layer), the generating of the list 530 and the determining of the fourth RAT list 531 or 532 for a network search in a roaming state may be performed in, for example, an NAS layer, and a network search using the fourth RAT list 531 or 532 may be performed in, for example, an AS layer.

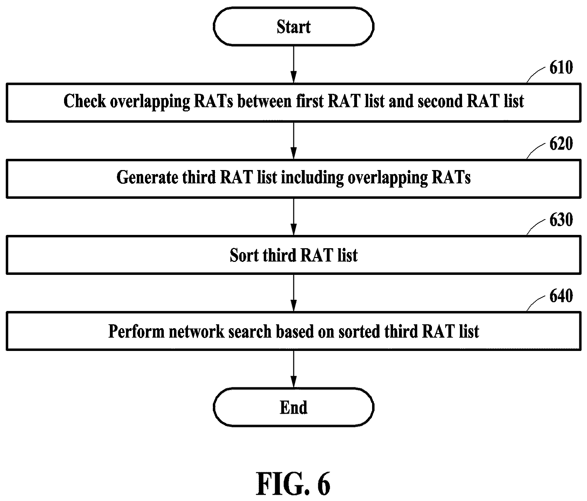

FIG. 6 is a flowchart illustrating an example of a network search of an electronic device when the electronic device is not in a roaming state, according to an embodiment.

Referring to FIG. 6, in operation 610, the electronic device 301 may check overlapping RATs between a first RAT list (e.g., the first RAT list 410 of FIG. 4A or the first RAT list 410-1 of FIG. 4B) and a second RAT list (e.g., the second RAT list 420 of FIGS. 4A and 4B). One or more RATs may overlap between the first RAT list 410 and the second RAT list 420 of FIG. 4A, or the RATs in the first RAT list 410-1 of FIG. 4B and the RATs in the second RAT list 420 may all be the same.

In operation 620, the electronic device 301 may generate a third RAT list (e.g., the third RAT list 430 of FIG. 4A or the third RAT list 440 of FIG. 4B) including the overlapping RATs.

In operation 630, the electronic device 301 may sort the third RAT list 430 or 440. For example, the electronic device 301 may sort the third RAT list 430 or 440 such that the most recent RAT among the RATs in the third RAT list 430 or 440 is in high order. For example, the electronic device 301 may sort the third RAT list 430 or 440 such that the most recent RAT is first in the third RAT list 430 or 440, the second most recent RAT is second in the third RAT list 430 or 440, and so on, with the least recent RAT last in the third RAT list 430 or 440.

In operation 640, the electronic device 301 may perform a network search based on the sorted third RAT list 431 or 441. For example, the electronic device 301 may search for the RATs in priority order according to the sorted third RAT list 431 or 441 (i.e. according to the positions of the RATs in the sorted third RAT list 431 or 441) until a RAT is found. The electronic device 301, when finding a suitable network through operation 640, may perform registration (e.g., location registration) on the found network.

According to an embodiment, there may be the remainder (e.g., the WCDMA of FIG. 4A), excluding the overlapping RATs among the RATs in the first RAT list 410 and the second RAT list 420 of FIG. 4A. For example, the remainder may comprise RATs included in the first RAT list 410 that are not included in the second RAT list 420, and RATs included in the second RAT list 420 that are not included in the first RAT list 410. In this case, the electronic device 301 may add the remainder (e.g., the WCDMA of FIG. 4A) to the sorted third RAT list 431. The remainder may be added to the end of the sorted third RAT list 431, such that the RATs in the remainder have a lower priority than the overlapping RATs. The electronic device 301 may perform a network search based on the third RAT list 432 with the remainder (e.g., the WCDMA of FIG. 4A) added. For example, the electronic device 301 may search for the RATs in priority order according to the third RAT list 432 (i.e. according to the positions of the RATs in the third RAT list 432) until a RAT is found.

According to embodiments, there may be no overlapping RATs between the first RAT list 410 and the second RAT list 420. For example, when the first RAT list 410 or 410-1 is not stored in the SIM 330, the electronic device 301 may determine that there are no overlapping RATs between the first RAT list 410 or 410-1 and the second RAT list 420. In this case, the electronic device 301 may perform a network search based on the second RAT list 420. For example, the electronic device may 301 search for the RATs in priority order according to the second RAT list 420 (i.e. according to the positions of the RATs in the second RAT list 420) until a RAT is found.

According to an embodiment, the electronic device 301 may search for high network (or the most recent network) first. Thus, the electronic device 301 may be connected to the high network within a short time after being powered on and may provide services to a user in a network that supports faster data transmission.

According to an embodiment, the electronic device 301 may include a plurality of SIMs (e.g., the SIM 330 and a SIM₁ (not shown)). The electronic device 301, when using the SIM 330 among the plurality of SIMs, may perform operations 610 to 640. The electronic device 301, when using the SIM₁ among the plurality of SIMs, may generate a RAT list (hereinafter the RAT list 1) including overlapping RATs between the RAT list (e.g., a RAT list for an HPLMN of the SIM₁) stored in the SIM₁ and the second RAT list 420, may sort the generated RAT list 1 based on priority (e.g., the most recent order of RATs), and may perform a network search based on the sorted RAT list 1. For example, the electronic device 301 may perform operations 610 to 640 using a RAT list stored in the SIM₁ instead of the RAT list stored in the SIM 330.

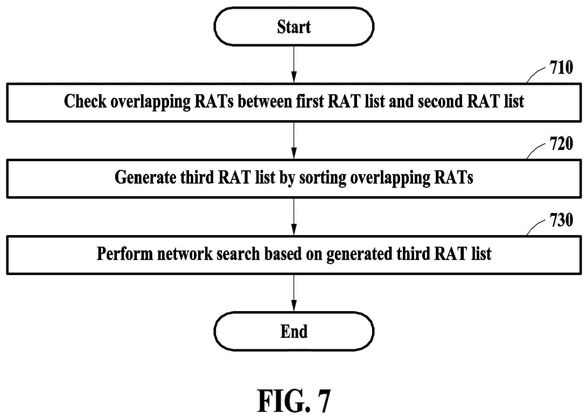

FIG. 7 is a flowchart illustrating another example of a network search of an electronic device when the electronic device is not in a roaming state, according to an embodiment.

Referring to FIG. 7, in operation 710, the electronic device 301 may check overlapping RATs (e.g., the GSM, the LTE, and the NR of FIG. 4A or the GSM, the LTE, the NR, and the WCDMA of FIG. 4B) between a first RAT list (e.g., the first RAT list 410 of FIG. 4A or the first RAT list 410-1 of FIG. 4B) and a second RAT list (e.g., the second RAT list 420 of FIGS. 4A and 4B).

In operation 720, the electronic device 301 may generate a third RAT list (e.g., the third RAT list 431 of FIG. 4A or the third RAT list 441 of FIG. 4B) by sorting the overlapping RATs. For example, the electronic device 301 may generate the third RAT list such that the most recent RAT is first in the third RAT list, the second most recent RAT is second in the third RAT list, and so on, with the least recent RAT last in the third RAT list. For example, the GSM, the LTE, and the NR may overlap in the first RAT list 410 and the second RAT list 420 of FIG. 4A. The electronic device 301 may sort the overlapping RATs (e.g., the GSM, the LTE, and the NR) in the most recent order: the NR, the LTE, and the GSM. The electronic device 301 may generate the third RAT list 431 with the NR having the first order, the LTE having the second order, and the GSM having the third order. For another example, the GSM, the LTE, the NR, and the WCDMA may overlap in the first RAT list 410-1 and the second RAT list 420 of FIG. 4B. The electronic device 301 may sort the overlapping RATs (e.g., the GSM, the LTE, the NR, and the WCDMA) in the most recent order: the NR, the LTE, the WCDMA, and the GSM. The electronic device 301 may generate the third RAT list 441 with the NR having the first order, the LTE having the second order, the WCDMA having the third order, and the GSM having the fourth order.

In operation 730, the electronic device 301 may perform a network search based on the generated third RAT list (e.g., the third RAT list 431 of FIG. 4A or the third RAT list 441 of FIG. 4B). For example, the electronic device 301 may search for the RATs in priority order according to the generated third RAT list (i.e. according to the positions of the RATs in the generated third RAT list) until a RAT is found. The electronic device 301, when finding a suitable network through operation 730, may perform registration (e.g., location registration) on the found network. According to an embodiment, there may be the remainder (e.g., the WCDMA of FIG. 4A), excluding the overlapping RATs among the RATs in the first RAT list 410 and the second RAT list 420 of FIG. 4A. For example, the remainder may comprise RATs included in the first RAT list 410 that are not included in the second RAT list 420, and RATs included in the second RAT list 420 that are not included in the first RAT list 410. In this case, the electronic device 301 may add the remainder (e.g., the WCDMA of FIG. 4A) to the third RAT list (e.g., the third RAT list 431 of FIG. 4A) generated through operation 720, and, in operation 730, may perform a network search based on the third RAT list (e.g., the third RAT list 432 of FIG. 4A) with the remainder added. The remainder may be added to the end of the generated third RAT list, such that the RATs in the remainder have a lower priority than the overlapping RATs.

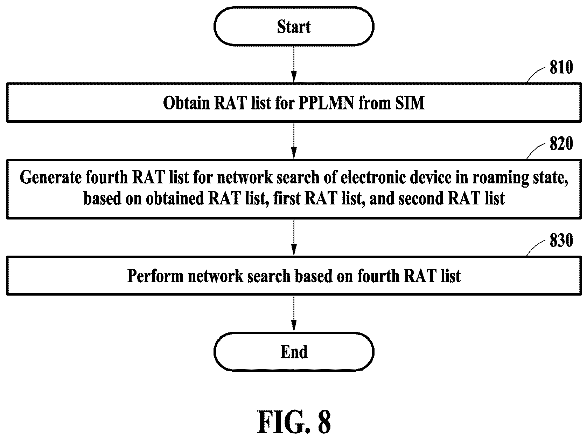

FIG. 8 is a flowchart illustrating an example of a network search of an electronic device when the electronic device is in a roaming state, according to an embodiment.

Referring to FIG. 8, in operation 810, the electronic device 301 may obtain a RAT list (e.g., the RAT list 540 of FIG. 5) for a PPLMN from the SIM 330.

In operation 820, the electronic device 301 may generate (or determine) a fourth RAT list (e.g., the fourth RAT list 531 or the fourth RAT list 532 of FIG. 5) for a network search of the electronic device in a roaming state, based on the obtained RAT list 540 for the PPLMN, a first RAT list (e.g., the first RAT list 510 of FIG. 5), and a second RAT list (e.g., the second RAT list 520 of FIG. 5).

For example, the electronic device 301 may generate a list (e.g., the list 530 of FIG. 5) including RATs in the obtained RAT list 540. The electronic device 301 may check overlapping RATs (e.g., the GSM and the LTE of FIG. 5) in the first RAT list 510 and the second RAT list 520. The electronic device 301 may add the overlapping RATs (e.g., the GSM and the LTE) to the list 530 to generate the fourth RAT list 531. The overlapping RATs may be added to the end of the list 530, such that the overlapping RATs have a lower priority than the RATs from the obtained RAT list 540 (i.e. the RATs supported by the PPLMN of the electronic device 301). According to an embodiment, there may be the remainder (e.g., the NR of FIG. 5), excluding the RATs (e.g., the WCDMA) in the RAT list 540 and the overlapping RATs (e.g., the GSM and the LTE) among the RATs in the first RAT list 510 and the second RAT list 520. For example, the remainder may comprise RATs included in the first RAT list 510 that are not included in the second RAT list 520 or the obtained RAT list 540, and RATs included in the second RAT list 520 that are not included in the first RAT list 510 or the obtained RAT list 540. In this case, the electronic device 301, by adding the remainder (e.g., the NR) to the fourth RAT list 531, may determine the fourth RAT list 532 with the remainder added. The remainder may be added to the end of the fourth RAT list 531, such that the RATs in the remainder have a lower priority than the overlapping RATs.

In operation 830, the electronic device 301 may perform a network search based on the fourth RAT list 531 or 532. For example, the electronic device 301 may search for the RATs in priority order according to the fourth RAT list 531 or 532 (i.e. according to the positions of the RATs in the fourth RAT list 531 or 532) until a RAT is found. The electronic device 301, when finding a suitable network through operation 830, may perform registration (e.g., location registration) on the found network.

An existing electronic device, when there is a PPLMN in a roaming state, may search for network first in a combination of the PPLMN and an RAT supported by the PPLMN and, when the network is not found, may search for network according to an RAT search order. For example, the HPLMN A 511 and the first RAT list 510 and the PPLMN B 541 and the RAT list 540 may be stored in a SIM of the typical electronic device, the second RAT list 520 may be stored in memory of the typical electronic device. In this case, the typical electronic device may search for network first in a combination of the WCDMA in the RAT list 540 and the PPLMN B 541. When the network is not found in the combination of the WCDMA and the PPLMN B 541, the RAT search order may be "NR→LTE→GSM" according to the second RAT list 520. An RAT (e.g., NR) that is not supported by the HPLMN A 511 of the typical electronic device may have a high priority in the order of "NR→LTE→GSM". In this case, when the typical electronic device attempts to register with the RAT (e.g., the NR) that is not supported by the HPLMN A 511, the registration may be rejected, and a long time may be required for the typical electronic device to obtain a network (or to register with the network). According to an embodiment, the electronic device 301 of the present disclosure may perform operations 810 to 830, and thus, a network may be obtained faster.

According to an embodiment, the electronic device 301 may include a plurality of SIMs (e.g., the SIM 330 and a SIM₁ (not shown)). The electronic device 301, in a roaming state using the SIM 330 among a plurality of SIMs, may perform operations 810 to 830. The electronic device 301, in a roaming state using the SIM₁ among the plurality of SIMs, may generate a list (hereinafter, a "list A") including an RAT for a PPLMN of the SIM₁. The electronic device 301 may add overlapping RATs between a RAT list for an HPLMN of the SIM₁ and the second RAT list 420 to the list A and may perform a network search based on the list A with the overlapping RATs added. For example, the electronic device 301 may perform operations 810 to 830 using a list including an RAT for a PPLMN of the SIM₁ stored in the SIM₁ instead of the list including an RAT for a PPLMN of the SIM 330 stored in the SIM 330.

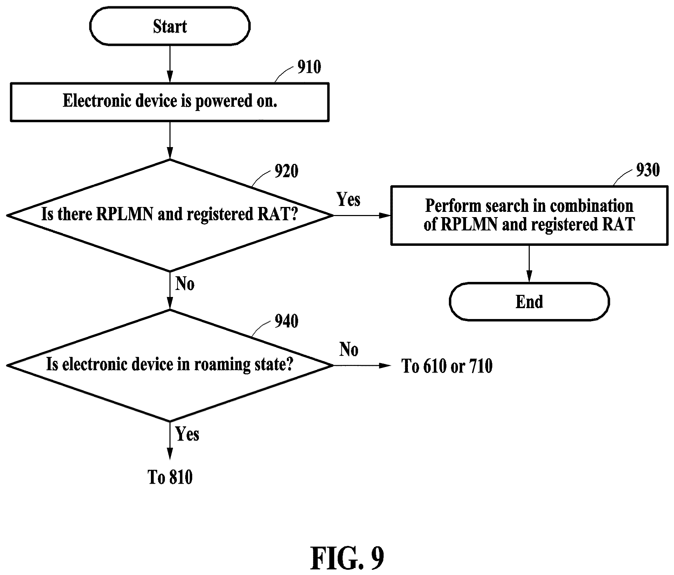

FIG. 9 is a flowchart illustrating an operation method of an electronic device according to an embodiment.

Referring to FIG. 9, in operation 910, the electronic device 301 is powered on.

In operation 920, the electronic device 301 may determine whether there is a RPLMN and a registered RAT. For example, the electronic device 301 may check (or determine) whether information (e.g., an identifier of the RPLMN) of the RPLMN is stored in the SIM 330. The electronic device 301, when the information of the RPLMN is not stored in the SIM 330, may check (or determine) that the electronic device 301 does not have the RPLMN. That is, the electronic device 301 may check if the information of the RPLMN is stored in the SIM 330, and if it is determined that the information of the RPLMN is not stored in the SIM 330, then the electronic device 301 may determine that the electronic device 301 does not have the RPLMN (or the valid RPLMN). The electronic device 301, when the information of the RPLMN is stored in the SIM 330, may compare country code (e.g. an MCC) of a PLMN identifier in a system information message received from a network with a country code (e.g. an MCC) of the information of the RPLMN stored in the SIM 330. The electronic device 301 may check (or determine) that the electronic device 301 has the RPLMN when the country code (e.g. an MCC) of the PLMN identifier in the system information message matches the country code (e.g. an MCC) of the information of the RPLMN stored in the SIM 330. That is, the electronic device 301 may check if the country code of the PLMN identifier in the system information message matches the country code of the information of the RPLMN stored in the SIM 330, and if it is determined that the country code of the PLMN identifier in the system information message matches the country code of the information of the RPLMN stored in the SIM 330, then the electronic device 301 may determine that the electronic device 301 has the RPLMN (or the valid RPLMN). The electronic device 301 may check (or determine) that the electronic device 301 does not have the RPLMN when the country code (e.g. an MCC) of the PLMN identifier in the system information message does not match the country code (e.g. an MCC) of the information of the RPLMN stored in the SIM 330. That is, the electronic device 301 may check if the country code of the PLMN identifier in the system information message matches the country code of the information of the RPLMN stored in the SIM 330, and if it is determined that the country code of the PLMN identifier in the system information message does not match the country code of the information of the RPLMN stored in the SIM 330, then the electronic device 301 may determine that the electronic device 301 does not have the RPLMN (or the valid RPLMN). The electronic device 301 may check (or determine) whether information (e.g., an identifier of the registered RAT) of the registered RAT is stored in the memory 310. The electronic device 301, when the information of the registered RAT is not stored in the memory 310, may check (or determine) that the electronic device 301 does not have the registered RAT. That is, the electronic device 301 may check if the information of the registered RAT is stored in the memory 310, and if it is determined that the information of the registered RAT is not stored in the memory 310, then the electronic device 301 may determine that the electronic device 301 does not have the registered RAT (or the valid registered RAT). The electronic device 301, when the information of the registered RAT is stored in the memory 310, may check (or determine) that the electronic device 301 has the registered RAT.

When determining that there is the RPLMN and the registered RAT (operation 920 - Yes), the electronic device 301 may perform a search (e.g., a network search) in a combination of the RPLMN and the registered RAT in operation 930. For example, the electronic device 301, when determining that there is the RPLMN, may select the RPLMN. The electronic device 301 may search for network in a combination of the selected RPLMN and the registered RAT.

When determining that there is no RPLMN and/or no registered RAT (operation 920-No), in operation 940, the electronic device 301 may determine whether the electronic device 301 is in a roaming state. For example, the electronic device 301 may determine that the electronic device 301 is in a roaming state when an MCC of an IMSI of the electronic device 301 does not match the MCC in the system information message received from a network. The electronic device 301 may compare an MNC of the IMSI of the electronic device 301 with an MNC of the system information message received from the network when the MCC of the IMSI of the electronic device 301 matches the MCC in the system information message received from the network. The electronic device 301 may determine that the electronic device 301 is not in a roaming state when at least some of or all the MNC of the IMSI of the electronic device 301 matches the MNC in the system information message received from the network. The electronic device 301 may determine that the electronic device 301 is in a roaming state when at least some of or all the MNC of the IMSI of the electronic device 301 does not match the MNC in the system information message received from the network.

The electronic device 301, when determining that the electronic device 301 is not in a roaming state (operation 940-No), may select a first PLMN (e.g., an HPLMN) and may perform operation 610 or 710. The electronic device 301, when performing operation 610, may perform operations 620, 630, and 640. The electronic device 301, when performing operation 710, may perform operations 720 and 730.

The electronic device 301, when determining that the electronic device 301 is in a roaming state (operation 940-Yes), may select a second PLMN (e.g., a PPLMN) and may perform operation 810. The electronic device 301, when performing operation 810, may perform operations 820 and 830.

The embodiments described through FIGS. 1 to 8 may be applied to the electronic device 301 of FIG. 9.

According to an embodiment, the electronic device 101, 201, or 301 includes the SIM 196 or 330 storing a first RAT list (e.g., the first RAT list 410 of FIG. 4A, the first RAT list 410-1 of FIG. 4B, or the first RAT list 510 of FIG. 5) for a first PLMN (e.g., the HPLMN A 411 of FIGS. 4A and 4B or the HPLMN A 511 of FIG. 5), the memory 130 or 310 storing instructions and storing a second RAT list (e.g., the second RAT list 420 of FIGS. 4A and 4B or the second RAT list 520 of FIG. 5) in which RATs supported by the electronic device are sorted by priority, and the at least one processor 120, 210, or 320 including processing circuitry. The instructions, when executed by the at least one processor individually or collectively, may cause the electronic device to check overlapping RATs between the first RAT list and the second RAT list, generate a third RAT list (e.g., the third RAT list 430 of FIG. 4A or the third RAT list 440 of FIG. 4B) including the overlapping RATs, sort the third RAT list generated based on the priority, and perform a network search based on the sorted third RAT list (e.g., the sorted third RAT list 431 of FIG. 4A or the sorted third RAT list 441 of FIG. 4B).

The instructions, when executed by the at least one processor individually or collectively, may cause the electronic device to add a remaining RAT, excluding the overlapping RATs among RATs in the first RAT list and the second RAT list, to the sorted third RAT list 431.

The instructions, when executed by the at least one processor individually or collectively, may cause the electronic device to determine whether a RPLMN and a registered RAT are included in the electronic device and determine whether the electronic device is in a roaming state when the RPLMN and the registered RAT are determined to be not included.

The instructions, when executed by the at least one processor individually or collectively, may cause the electronic device to perform the checking, the generating, the sorting, and the performing when the electronic device is determined to be not in the roaming state.

The instructions, when executed by the at least one processor individually or collectively, may cause the electronic device to obtain a RAT list (e.g., the RAT list 540 of FIG. 5) for a second PLMN (e.g., the PPLMN B 541 of FIG. 5) from the SIM when the electronic device is determined to be in the roaming state and generate a fourth RAT list (e.g., the fourth RAT list 532 of FIG. 5) for a network search of the electronic device in the roaming state, based on the obtained RAT list 540, the first RAT list, and the second RAT list.

In the fourth RAT list, a RAT in the obtained RAT list may have the highest priority, the overlapping RATs may have a lower priority than the RAT in the obtained RAT list, and a remaining RAT, excluding the RAT in the obtained RAT list and the overlapping RATs, among RATs in the first RAT list and the second RAT list may have a lower priority than the overlapping RATs.

The first PLMN may include an HPLMN, and the second PLMN may include a PPLMN.

The determining of whether the RPLMN and the registered RAT are included may include determining that the RPLMN is not included when information of the RPLMN is not stored in a first field of the SIM, determining that the RPLMN is included when the information of the RPLMN is stored in the first field, and a country code in a system information message received from a network matches a country code of the information of the RPLMN or determining that the registered RAT is not included when information of the registered RAT is not stored in the memory, and determining that the registered RAT is included when the information of the registered RAT is stored in the memory.

According to an embodiment, an electronic device 101, 201, or 301 includes the SIM 196 or 330 storing a first RAT list for a first PLMN, the memory 130 or 310 storing instructions and storing a second RAT list in which RATs supported by the electronic device are sorted by priority, and the at least one processor 120, 210, or 320 including processing circuitry. The instructions, when executed by the at least one processor individually or collectively, may cause the electronic device to determine whether a RPLMN and a registered RAT are included in the electronic device, select the first PLMN when the RPLMN and the registered RAT are determined to be not included, check overlapping RATs between the first RAT list and the second RAT list after selecting the first PLMN, generate a third RAT list including the overlapping RATs, sort the third RAT list generated based on the priority, and perform a network search based on the sorted third RAT list.

The instructions, when executed by the at least one processor individually or collectively, may cause the electronic device to add a remaining RAT, excluding the overlapping RATs among RATs in the first RAT list and the second RAT list, to the sorted third RAT list.

The instructions, when executed by the at least one processor individually or collectively, may cause the electronic device to determine whether the electronic device is in a roaming state when the RPLMN and the registered RAT are determined to be not included.

The instructions, when executed by the at least one processor individually or collectively, may cause the electronic device to obtain a RAT list for a second PLMN from the SIM when the electronic device is determined to be in the roaming state and generate a fourth RAT list for a network search of the electronic device in the roaming state, based on the obtained RAT list, the first RAT list, and the second RAT list.

In the fourth RAT list, a RAT in the obtained RAT list may have the highest priority, the overlapping RATs may have a lower priority than the RAT in the obtained RAT list, and a remaining RAT, excluding the RAT in the obtained RAT list and the overlapping RATs, among RATs in the first RAT list and the second RAT list may have a lower priority than the overlapping RATs.

The determining of whether the RPLMN and the registered RAT are included may include determining that the RPLMN is not included when information of the RPLMN is not stored in a first field of the SIM, determining that the RPLMN is included when the information of the RPLMN is stored in the first field, and a country code in a system information message received from a network matches a country code of the information of the RPLMN or determining that the registered RAT is not included when information of the registered RAT is not stored in the memory, and determining that the registered RAT is included when the information of the registered RAT is stored in the memory.

According to an embodiment, an operating method of an electronic device includes checking overlapping RATs between a first RAT list stored in a SIM of the electronic device and a second RAT list stored in memory of the electronic device, in which the first RAT list refers to a list of RATs for a first PLMN, and the second RAT list refers to a list of RATs supported by the electronic device are sorted by priority, generating a third RAT list including the overlapping RATs, sorting the third RAT list generated based on the priority, and performing a network search based on the sorted third RAT list.

The operating method may further include adding a remaining RAT, excluding the overlapping RATs among RATs in the first RAT list and the second RAT list, to the sorted third RAT list.

The operating method may further include determining whether a RPLMN and a registered RAT are included in the electronic device and determining whether the electronic device is in a roaming state when the RPLMN and the registered RAT are determined to be not included.

The operating method may further include performing the checking, the generating, the sorting, and the performing when the electronic device is determined to be not in the roaming state.

The operating method may further include obtaining a RAT list for a second PLMN from the SIM when the electronic device is determined to be in the roaming state and generating a fourth RAT list for a network search of the electronic device in the roaming state, based on the obtained RAT list, the first RAT list, and the second RAT list.

In the fourth RAT list, a RAT in the obtained RAT list may have the highest priority, the overlapping RATs may have a lower priority than the RAT in the obtained RAT list, and a remaining RAT, excluding the RAT in the obtained RAT list and the overlapping RATs, among RATs in the first RAT list and the second RAT list may have a lower priority than the overlapping RATs.

In a first example, there is provided an electronic device (e.g. electronic device 101, 201, 301) comprising: a subscriber identification module (SIM) (e.g. SIM 196, 330) storing a first radio access technology (RAT) list for a first public land mobile network (PLMN); memory (e.g. memory 130, 310_ storing instructions and storing a second RAT list in which RATs supported by the electronic device are sorted by priority; and at least one processor (e.g. processor 120, 210, 320) comprising processing circuitry, wherein the instructions, when executed by the at least one processor individually or collectively, cause the electronic device to check overlapping RATs between the first RAT list and the second RAT list, generate a third RAT list comprising the overlapping RATs, sort the third RAT list generated based on the priority, and perform a network search based on the sorted third RAT list.

In a second example, there is provided the electronic device (e.g. electronic device 101, 201, 301) of the first example, wherein the instructions, when executed by the at least one processor individually or collectively, cause the electronic device to add a remaining RAT, excluding the overlapping RATs among RATs in the first RAT list and the second RAT list, to the sorted third RAT list.

In a third example, there is provided the electronic device (e.g. electronic device 101, 201, 301) of one of the first and second examples, wherein the instructions, when executed by the at least one processor individually or collectively, cause the electronic device to determine whether a registered PLMN (RPLMN) and a registered RAT are comprised in the electronic device, and determine whether the electronic device is in a roaming state when the RPLMN and the registered RAT are determined to be not comprised.

In a fourth example, there is provided the electronic device (e.g. electronic device 101, 201, 301) of the third example, wherein the instructions, when executed by the at least one processor individually or collectively, cause the electronic device to perform the checking, the generating, the sorting, and the performing when the electronic device is determined to be not in the roaming state.

In a fifth example, there is provided the electronic device (e.g. electronic device 101, 201, 301) of the third example, wherein the instructions, when executed by the at least one processor individually or collectively, cause the electronic device to obtain a RAT list for a second PLMN from the SIM when the electronic device is determined to be in the roaming state, and generate a fourth RAT list for a network search of the electronic device in the roaming state, based on the obtained RAT list, the first RAT list, and the second RAT list.

In a sixth example, there is provided the electronic device (e.g. electronic device 101, 201, 301) of the fifth example, wherein, in the fourth RAT list, a RAT in the obtained RAT list has a highest priority, the overlapping RATs have a lower priority than the RAT in the obtained RAT list, and a remaining RAT, excluding the RAT in the obtained RAT list and the overlapping RATs, among RATs in the first RAT list and the second RAT list has a lower priority than the overlapping RATs.

In a seventh example, there is provided the electronic device (e.g. electronic device 101, 201, 301) of the fifth example, wherein the first PLMN comprises a home PLMN (HPLMN), and the second PLMN comprises a preferred PLMN (PPLMN).

In an eighth example, there is provided the electronic device (e.g. electronic device 101, 201, 301) of the third example, wherein the determining of whether the RPLMN and the registered RAT are comprised comprises: determining that the RPLMN is not comprised when information of the RPLMN is not stored in a first field of the SIM; determining that the RPLMN is comprised when the information of the RPLMN is stored in the first field, and a country code in a system information message received from a network matches a country code of the information of the RPLMN; or determining that the registered RAT is not comprised when information of the registered RAT is not stored in the memory and determining that the registered RAT is comprised when the information of the registered RAT is stored in the memory.

In a ninth example, there is provided an electronic device (e.g. electronic device 101, 201, 301) comprising: a subscriber identification module (SIM) (e.g. SIM 196, 330) storing a first radio access technology (RAT) list for a first public land mobile network (PLMN); memory (e.g. memory 130, 310) storing instructions and storing a second RAT list in which RATs supported by the electronic device are sorted by priority; and at least one processor (e.g. processor 120, 210, 320) comprising processing circuitry, wherein the instructions, when executed by the at least one processor individually or collectively, cause the electronic device to determine whether a registered PLMN (RPLMN) and a registered RAT are comprised in the electronic device, select the first PLMN when the RPLMN and the registered RAT are determined to be not comprised, check overlapping RATs between the first RAT list and the second RAT list after selecting the first PLMN, generate a third RAT list comprising the overlapping RATs, sort the third RAT list generated based on the priority, and perform a network search based on the sorted third RAT list.

In a tenth example, there is provided the electronic device (e.g. electronic device 101, 201, 301) of the ninth example, wherein the instructions, when executed by the at least one processor individually or collectively, cause the electronic device to add a remaining RAT, excluding the overlapping RATs among RATs in the first RAT list and the second RAT list, to the sorted third RAT list.

In an eleventh example, there is provided the electronic device (e.g. electronic device 101, 201, 301) of one of the ninth and tenth examples, wherein the instructions, when executed by the at least one processor individually or collectively, cause the electronic device to determine whether the electronic device is in a roaming state when the RPLMN and the registered RAT are determined to be not comprised.

In a twelfth example, there is provided the electronic device (e.g. electronic device 101, 201, 301) of the eleventh example, wherein the instructions, when executed by the at least one processor individually or collectively, cause the electronic device to obtain a RAT list for a second PLMN from the SIM when the electronic device is determined to be in the roaming state, and generate a fourth RAT list for a network search of the electronic device in the roaming state, based on the obtained RAT list, the first RAT list, and the second RAT list.

In a thirteenth example, there is provided the electronic device (e.g. electronic device 101, 201, 301) of the twelfth example, wherein, in the fourth RAT list, a RAT in the obtained RAT list has a highest priority, the overlapping RATs have a lower priority than the RAT in the obtained RAT list, and a remaining RAT, excluding the RAT in the obtained RAT list and the overlapping RATs, among RATs in the first RAT list and the second RAT list has a lower priority than the overlapping RATs.

In a fourteenth example, there is provided the electronic device (e.g. electronic device 101, 201, 301) of the ninth example, wherein the determining of whether the RPLMN and the registered RAT are comprised comprises: determining that the RPLMN is not comprised when information of the RPLMN is not stored in a first field of the SIM; determining that the RPLMN is comprised when the information of the RPLMN is stored in the first field, and a country code in a system information message received from a network matches a country code of the information of the RPLMN; or determining that the registered RAT is not comprised when information of the registered RAT is not stored in the memory and determining that the registered RAT is comprised when the information of the registered RAT is stored in the memory.

In a fifteenth example, there is provided an operating method of an electronic device, the operating method comprising: checking overlapping radio access technologies (RATs) between a first RAT list stored in a subscriber identification module (SIM) of the electronic device and a second RAT list stored in memory of the electronic device, wherein the first RAT list refers to a list of RATs for a first public land mobile network (PLMN), and the second RAT list refers to a list of RATs supported by the electronic device are sorted by priority; generating a third RAT list comprising the overlapping RATs; sorting the third RAT list generated based on the priority; and performing a network search based on the sorted third RAT list.

In a sixteenth example, there is provided the operating method of the fifteenth example, further comprising: adding a remaining RAT, excluding the overlapping RATs among RATs in the first RAT list and the second RAT list, to the sorted third RAT list.

In a seventeenth example, there is provided the operating method of the fifteenth example, further comprising: determining whether a registered PLMN (RPLMN) and a registered RAT are comprised in the electronic device; and determining whether the electronic device is in a roaming state when the RPLMN and the registered RAT are determined to be not comprised.

In an eighteenth example, there is provided the operating method of the seventeenth example, further comprising: performing the checking, the generating, the sorting, and the performing when the electronic device is determined to be not in the roaming state.

In a nineteenth example, there is provided the operating method of the seventeenth example, further comprising: obtaining a RAT list for a second PLMN from the SIM when the electronic device is determined to be in the roaming state; and generating a fourth RAT list for a network search of the electronic device in the roaming state, based on the obtained RAT list, the first RAT list, and the second RAT list.

In a twentieth example, there is provided the operating method of the nineteenth example, wherein, in the fourth RAT list, a RAT in the obtained RAT list has a highest priority, the overlapping RATs have a lower priority than the RAT in the obtained RAT list, and a remaining RAT, excluding the RAT in the obtained RAT list and the overlapping RATs, among RATs in the first RAT list and the second RAT list has a lower priority than the overlapping RATs.

In a twenty-first example, there is provided an electronic device (e.g. electronic device 101, 201, 301) comprising: a subscriber identification module (SIM) (e.g. SIM 196, 330) storing a first radio access technology (RAT) list for a first public land mobile network (PLMN); memory (e.g. memory 130, 310) storing instructions and storing a second RAT list in which RATs supported by the electronic device are sorted by priority; and at least one processor (e.g. processor 120, 210, 320) comprising processing circuitry, wherein the instructions, when executed by the at least one processor individually or collectively, cause the electronic device to: check for overlapping RATs between the first RAT list and the second RAT list, generate a third RAT list comprising the overlapping RATs, sort the third RAT list based on the priority, and perform a network search based on the sorted third RAT list.

In a twenty-second example, there is provided the electronic device (e.g. electronic device 101, 201, 301) of the twenty-first example, wherein the instructions, when executed by the at least one processor individually or collectively, cause the electronic device to add at least one remaining RAT among RATs in the first RAT list and the second RAT list, excluding the overlapping RATs, to the sorted third RAT list.

In a twenty-third example, there is provided the electronic device (e.g. electronic device 101, 201, 301) of the twenty-first or twenty-second example, wherein the instructions, when executed by the at least one processor individually or collectively, cause the electronic device to determine whether the electronic device has a valid registered PLMN (RPLMN) and a registered RAT.

In a twenty-fourth example, there is provided the electronic device (e.g. electronic device 101, 201, 301) of the twenty-third example, wherein the instructions, when executed by the at least one processor individually or collectively, cause the electronic device to: select the first PLMN when it is determined that the electronic device does not have the valid RPLMN and the registered RAT, and perform the checking, the generating, the sorting, and the performing after selecting the first PLMN.

In a twenty-fifth example, there is provided the electronic device (e.g. electronic device 101, 201, 301) of the twenty-third or twenty-fourth example, wherein the determining of whether electronic device has the valid RPLMN and the registered RAT comprises at least one of: determining that the electronic device does not have the valid RPLMN when information of the RPLMN is not stored in a first field of the SIM; determining that the electronic device does have the valid RPLMN when the information of the RPLMN is stored in the first field, and a country code in a system information message received from a network matches a country code of the information of the RPLMN; and determining that the electronic device does not have the registered RAT when information of the registered RAT is not stored in the memory, and determining that the electronic device does have the registered RAT when the information of the registered RAT is stored in the memory.

In a twenty-sixth example, there is provided the electronic device (e.g. electronic device 101, 201, 301) of any of the twenty-third to twenty-fifth examples, wherein the instructions, when executed by the at least one processor individually or collectively, cause the electronic device to determine whether the electronic device is in a roaming state when it is determined that the electronic device does not have the valid RPLMN and the registered RAT.

In a twenty-seventh example, there is provided the electronic device (e.g. electronic device 101, 201, 301) of the twenty-sixth example, wherein the instructions, when executed by the at least one processor individually or collectively, cause the electronic device to perform the checking, the generating, the sorting, and the performing when the electronic device is determined to not be in the roaming state.

In a twenty-eighth example, there is provided the electronic device (e.g. electronic device 101, 201, 301) of the twenty-sixth or twenty-seventh example, wherein the instructions, when executed by the at least one processor individually or collectively, cause the electronic device to: obtain a RAT list for a second PLMN from the SIM when the electronic device is determined to be in the roaming state, and generate a fourth RAT list for a network search of the electronic device in the roaming state, based on the obtained RAT list for the second PLMN, the first RAT list, and the second RAT list.

In a twenty-ninth example, there is provided the electronic device (e.g. electronic device 101, 201, 301) of the twenty-eighth example, wherein, in the generated fourth RAT list, RATs in the obtained RAT list for the second PLMN have a highest priority, the overlapping RATs have a lower priority than the RATs in the obtained RAT list, and remaining RATs among RATs in the first RAT list and the second RAT list, excluding the RAT in the obtained RAT list and the overlapping RATs, have a lower priority than the overlapping RATs.

In a thirtieth example, there is provided the electronic device (e.g. electronic device 101, 201, 301) of the twenty-eighth or twenty-ninth example, wherein the first PLMN comprises a home PLMN (HPLMN), and the second PLMN comprises a preferred PLMN (PPLMN).

In a thirty-first example, there is provided an operating method of an electronic device (101, 201, 301), the operating method comprising: checking for overlapping radio access technologies (RATs) between a first RAT list stored in a subscriber identification module (SIM) of the electronic device and a second RAT list stored in memory of the electronic device, wherein the first RAT list refers to a list of RATs for a first public land mobile network (PLMN), and the second RAT list refers to a list of RATs supported by the electronic device and sorted by priority; generating a third RAT list comprising the overlapping RATs; sorting the third RAT list based on the priority; and performing a network search based on the sorted third RAT list.

In a thirty-second example, there is provided the operating method of the thirty-first example, further comprising: adding at least one remaining RAT among RATs in the first RAT list and the second RAT list, excluding the overlapping RATs, to the sorted third RAT list.

In a thirty-third example, there is provided the operating method of the thirty-first or thirty-second example, further comprising: determining whether the electronic device has a valid registered PLMN (RPLMN) and a registered RAT; and determining whether the electronic device is in a roaming state when it is determined that the electronic device does not have the valid RPLMN and the registered RAT.

In a thirty-fourth example, there is provided the operating method of the thirty-third example, further comprising: performing the checking, the generating, the sorting, and the performing when the electronic device is determined to not be in the roaming state.

In a thirty-fifth example, there is provided the operating method of the thirty-third or thirty-fourth example, further comprising: obtaining a RAT list for a second PLMN from the SIM when the electronic device is determined to be in the roaming state; and generating a fourth RAT list for a network search of the electronic device in the roaming state, based on the obtained RAT list for the second PLMN, the first RAT list, and the second RAT list; wherein, in the generated fourth RAT list, RATs in the obtained RAT list have a highest priority, the overlapping RATs have a lower priority than the RATs in the obtained RAT list, and remaining RATs among RATs in the first RAT list and the second RAT list, excluding the RAT in the obtained RAT list and the overlapping RATs, have a lower priority than the overlapping RATs.

## Claims

1. An electronic device (101, 201, 301) comprising:
a subscriber identification module (SIM) (196, 330) storing a first radio access technology (RAT) list for a first public land mobile network (PLMN);
memory (130, 310) storing instructions and storing a second RAT list in which RATs supported by the electronic device are sorted by priority; and
at least one processor (120, 210, 320) comprising processing circuitry,
wherein the instructions, when executed by the at least one processor individually or collectively, cause the electronic device to:
check for overlapping RATs between the first RAT list and the second RAT list,
generate a third RAT list comprising the overlapping RATs,
sort the third RAT list based on the priority, and
perform a network search based on the sorted third RAT list.

2. The electronic device (101, 201, 301) of claim 1, wherein the instructions, when executed by the at least one processor individually or collectively, cause the electronic device to add at least one remaining RAT among RATs in the first RAT list and the second RAT list, excluding the overlapping RATs, to the sorted third RAT list.

3. The electronic device (101, 201, 301) of claim 1 or 2, wherein the instructions, when executed by the at least one processor individually or collectively, cause the electronic device to determine whether the electronic device has a valid registered PLMN (RPLMN) and a registered RAT.

4. The electronic device (101, 201, 301) of claim 3, wherein the instructions, when executed by the at least one processor individually or collectively, cause the electronic device to:
select the first PLMN when it is determined that the electronic device does not have the valid RPLMN and the registered RAT, and
perform the checking, the generating, the sorting, and the performing after selecting the first PLMN.

5. The electronic device (101, 201, 301) of claim 3 or 4, wherein the determining of whether electronic device has the valid RPLMN and the registered RAT comprises at least one of:
determining that the electronic device does not have the valid RPLMN when information of the valid RPLMN is not stored in a first field of the SIM;
determining that the electronic device does have the valid RPLMN when the information of the valid RPLMN is stored in the first field, and a country code in a system information message received from a network matches a country code of the information of the valid RPLMN; and
determining that the electronic device does not have the registered RAT when information of the registered RAT is not stored in the memory, and determining that the electronic device does have the registered RAT when the information of the registered RAT is stored in the memory.

6. The electronic device (101, 201, 301) of any one of claims 3 to 5, wherein the instructions, when executed by the at least one processor individually or collectively, cause the electronic device to determine whether the electronic device is in a roaming state when it is determined that the electronic device does not have the valid RPLMN and the registered RAT.

7. The electronic device (101, 201, 301) of claim 6, wherein the instructions, when executed by the at least one processor individually or collectively, cause the electronic device to perform the checking, the generating, the sorting, and the performing when the electronic device is determined to not be in the roaming state.

8. The electronic device (101, 201, 301) of claim 6 or 7, wherein the instructions, when executed by the at least one processor individually or collectively, cause the electronic device to:
obtain a RAT list for a second PLMN from the SIM when the electronic device is determined to be in the roaming state, and
generate a fourth RAT list for a network search of the electronic device in the roaming state, based on the obtained RAT list for the second PLMN, the first RAT list, and the second RAT list.

9. The electronic device (101, 201, 301) of claim 8, wherein, in the generated fourth RAT list, RATs in the obtained RAT list for the second PLMN have a highest priority, the overlapping RATs have a lower priority than the RATs in the obtained RAT list, and remaining RATs among RATs in the first RAT list and the second RAT list, excluding the RATs in the obtained RAT list and the overlapping RATs, have a lower priority than the overlapping RATs.

10. The electronic device (101, 201, 301) of claim 8 or 9, wherein the first PLMN comprises a home PLMN (HPLMN), and the second PLMN comprises a preferred PLMN (PPLMN).

11. An operating method of an electronic device (101, 201, 301), the operating method comprising:
checking for overlapping radio access technologies (RATs) between a first RAT list stored in a subscriber identification module (SIM) of the electronic device and a second RAT list stored in memory of the electronic device, wherein the first RAT list refers to a list of RATs for a first public land mobile network (PLMN), and the second RAT list refers to a list of RATs supported by the electronic device and sorted by priority;
generating a third RAT list comprising the overlapping RATs;
sorting the third RAT list based on the priority; and
performing a network search based on the sorted third RAT list.

12. The operating method of claim 11, further comprising:
adding at least one remaining RAT among RATs in the first RAT list and the second RAT list, excluding the overlapping RATs, to the sorted third RAT list.

13. The operating method of claim 11 or 12, further comprising:
determining whether the electronic device has a valid registered PLMN (RPLMN) and a registered RAT; and
determining whether the electronic device is in a roaming state when it is determined that the electronic device does not have the valid RPLMN and the registered RAT.

14. The operating method of claim 13, further comprising:
performing the checking, the generating, the sorting, and the performing when the electronic device is determined to not be in the roaming state.

15. The operating method of claim 13 or 14, further comprising:
obtaining a RAT list for a second PLMN from the SIM when the electronic device is determined to be in the roaming state; and
generating a fourth RAT list for a network search of the electronic device in the roaming state, based on the obtained RAT list for the second PLMN, the first RAT list, and the second RAT list;
wherein, in the generated fourth RAT list, RATs in the obtained RAT list have a highest priority, the overlapping RATs have a lower priority than the RATs in the obtained RAT list, and remaining RATs among RATs in the first RAT list and the second RAT list, excluding the RATs in the obtained RAT list and the overlapping RATs, have a lower priority than the overlapping RATs.
